# EUROPÄISCHE PATENTSCHRIFT

(11) **EP 2 072 381 B1**
(45) Veröffentlichungstag und Bekanntmachung des Hinweises auf die Patenterteilung: **11.02.2015**
(21) Anmeldenummer: 08016821.4
(22) Anmeldetag: 25.09.2008
(51) Int. Cl.: B62D 35/00, B62D 37/02

(54) **Kraftfahrzeug mit einer im Heckbereich angeordneten Luftleitvorrichtung**
Motor vehicle with a rear spoiler
Véhicule automobile doté d'un déflecteur arrière

(30) Priorität: 20.12.2007 DE 102007061812
(43) Veröffentlichungstag der Anmeldung: 24.06.2009
(73) Patentinhaber: Dr. Ing. h.c. F. Porsche AG, 70435 Stuttgart (DE)
(72) Erfinder: Paul, Joachim, 70563 Stuttgart (DE); Dinter, Andreas, 82152 Krailing (DE)

(56) Entgegenhaltungen:
- EP-A- 1 118 529
- EP-A- 1 310 421
- EP-A- 1 840 016
- WO-A-2007/095886

## Beschreibung

Die Erfindung betrifft ein Kraftfahrzeug, insbesondere Personenwagen, mit einer im Heckbereich angeordneten Luftleitvorrichtung gemäß dem Oberbegriff des Patentanspruchs 1.

Aus dem Serienfahrzeugbau ist es bekannt, im Heckbereich eines Kraftfahrzeugs sogenannte Spoiler vorzusehen, um den Luftwiderstandsbeiwert des Kraftfahrzeugs herabzusetzen und andererseits den dynamischen Hinterraddruck zu vergrößern. Darüber hinaus ist es bekannt, mit derartigen Spoilern bzw. Luftleitvorrichtungen Kühlluft für einen beispielsweise im Heckbereich angeordneten Motor zuzuführen.

Aus der gattungsgemäßen DE 10309369 A1 ist bekannt, die Luftleitvorrichtung mittels einer Verstelleinrichtung von einer bündig mit dem angrenzenden Aufbau des Heckbereichs verlaufenden Ruhestellung in eine demgegenüber ausgefahrene Betriebsstellung zu bewegen. Die Verstelleinrichtung umfasst zwei im seitlichen Bereich der Luftleitvorrichtung angeordnete Aussteller, die die Luftleitvorrichtung nach oben bzw. unten bewegt.

Die Aufgabe der Erfindung besteht nun darin, ein gattungsgemäßes Kraftfahrzeug dahingehend weiterzuentwickeln, dass auch bei beengtem Bauraum im Heckbereich eine ausfahrbare Luftleitvorrichtung untergebracht werden kann.

Die Aufgabe wird erfindungsgemäß mit den Merkmalen des Patentanspruchs 1 gelöst.

Vorteilhafte Ausgestaltungen ergeben sich aus den Merkmalen der Unteransprüche.

Der Kern der Erfindung ist darin zu sehen, dass die der Verstelleinrichtung zugeordneten, im seitlichen Bereich der Luftleitvorrichtung angeordnete Aussteller an einem Trägerteil drehgelenkig angebunden sind. Das Trägerteil lässt sich im Gegensatz zu der im Stand der Technik gezeigten Lösung im Wesentlichen in vertikaler Richtung im Heckbereich des Kraftfahrzeugs anordnen. Das Luftleitelement kann somit bei entsprechender Ausgestaltung der Aussteller auch an einer Position im Heckbereich untergebracht werden, die nicht unmittelbar im Nahbereich des Drehgelenks liegt.

So kann das Trägerteil beispielsweise an einem unter der Heckhaube angeordneten Querträger befestigt sein. Das hat den Vorteil, dass zugleich eine Versteifung des Heckbereichs erzielt wird.

Für eine Vormontage kann ein Antrieb der Verstelleinrichtung, zum Beispiel ein Elektromotor, an dem Trägerteil befestigt sein. Darüber hinaus können die Aussteller samt Luftleitvorrichtung an dem Trägerteil vormontiert werden und als Modul an den Querträger montiert werden.

Für den Antrieb der Aussteller ist vorgesehen, dass der Elektromotor mit den Ausstellern über flexible Wellen verbunden ist. Das hat den Vorteil, dass nur ein Antrieb für beide Aussteller benötigt wird und somit weniger Bauraum benötigt wird. Zugleich ist dadurch eine Gewichtseinsparung zu erreichen.

Für eine Integration der Aussteller in das Trägerteil können auf jeder Seite jeweils ein zum Querträger hin offener Bereich zur Aufnahme der Aussteller vorgesehen sein. Damit befinden sich die Aussteller in einem durch die angrenzenden Wände des Trägerteils und des Querträgers gebildeten Raum.

Eine bevorzugte Ausgestaltung der Aussteller besteht darin, dass jeder Aussteller jeweils zwei Lenker aufweist, die einerseits drehgelenkig am Trägerteil und andererseits drehgelenkig an einem Anbindungselement befestigt sind. Die Lenker können winkelförmig ausgestaltet sein. Damit ist ein stabiles Viergelenk geschaffen, dass die Luftleitvorrichtung auch bei starken strömungsbedingten Kräften sicher in jeder beliebigen Position vom Aufbau des Kraftfahrzeugs beabstandet hält.

In einer bevorzugten Ausgestaltung der Erfindung ist vorgesehen, dass das Anbindungselement an der Luftleitvorrichtung befestigt ist.

Ein Spoilerfuß kann jedes Anbindungselement zum Sichtbereich abdecken, so dass von außen her der Antrieb der Luftleitvorrichtung nicht zu erkennen ist.

Um ein einheitliches Spaltmaß in jeder Position des Luftleitelements zu erzielen, kann die Geometrie des Spoilerfußes an die Bahnkurve der Aufnahme und die Austrittsöffnung für jedes Anbindungselement an die Geometrie des Spoilerfußes angepasst sein.

Weitere vorteilhafte Ausgestaltungen werden im Folgenden anhand der Zeichnung erläutert. Dabei zeigen:

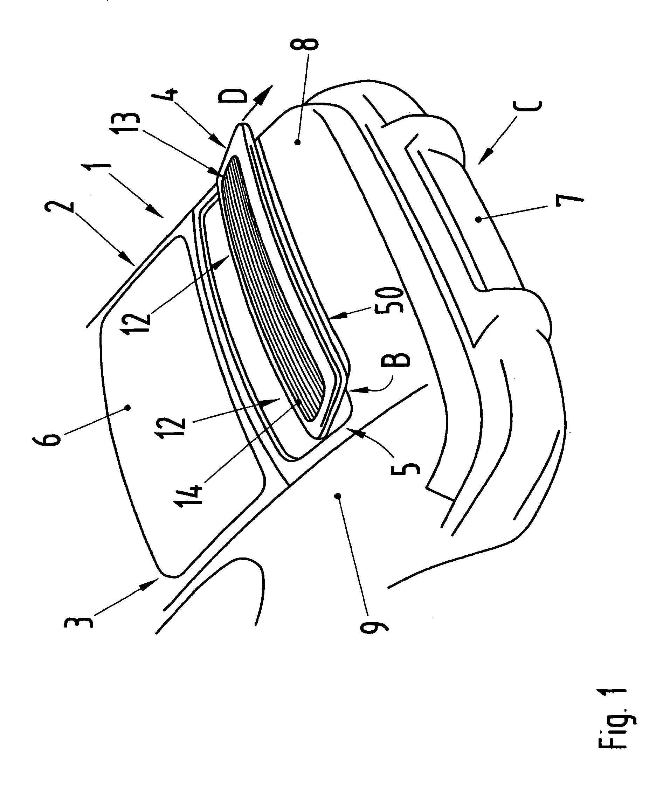

- Figur 1: eine Schrägansicht von hinten auf den Heckbereich eines Kraftfahrzeuges mit einer Luftleiteinrichtung,
- Figur 2: eine Anordnung des Antriebs für die Luftleiteinrichtung gemäß Figur 1,
- Figur 3: ein Trägerteil für den Antrieb gemäß Figur 2,
- Figur 4: eine Antriebskinematik des Antriebs für die Luftleiteinrichtung,
- Figur 5: zwei Lenker gemäß Figur 4,
- Figur 6: ein Anbindungselement für das Luftleitelement,
- Figur 7: eine Schrägansicht gemäß Figur 1 ohne Luftleitelement.

In dem dargestellten Ausführungsbeispiel umfasst ein Kraftfahrzeug 1 einen Aufbau 2 mit einer im Heckbereich 3 angeordneten Luftleitvorrichtung 4, die mittels einer Verstelleinrichtung 5 von einer bündig mit den angrenzenden Aufbau 2 verlaufenden Ruhestellung A in eine ausgefahrene Betriebsstellung B bewegbar ist. Durch die Luftleitvorrichtung 4 wird einerseits der Luftwiderstandsbeiwert des Kraftfahrzeuges 1 herabgesetzt und andererseits im Fahrbetrieb der dynamische Hinterraddruck vergrößert (Abtrieb).

Im Heckbereich 3 setzt sich der Aufbau 2 aus einer Heckscheibe 6, einem Stoßfänger 7 und einer Heckhaube 8 zusammen, die zwischen Seitenteilen 9 angeordnet sind. Die aus einem Außenteil und einem inneren Versteifungsrahmen gebildete Heckhaube 8 weist eine etwa rechteckförmige Öffnung 12 auf, in die die Luftleitvorrichtung 4 eingesetzt ist. In der Ruhestellung A verläuft das klappen- bzw. spoilerartig ausgebildete Luftleitelement 50 außenhautbündig mit der Kontur des fließheckartig ausgestalteten Heckbereich 3, wogegen sie in der Betriebsstellung B aus der Karosserieebene herausgeschwenkt ist, der Gestalt, dass ihre außenliegende Anströmfläche etwa horizontal angestellt ist. Gleichzeitig wird das Luftleitelement 50 entgegen der Fahrtrichtung C um ein Maß D nach hinten verschoben. Das Luftleitelement 50 weist ein großflächiges Lufteinlassgitter 13 auf, das mehrere Querstreben 14 besitzt.

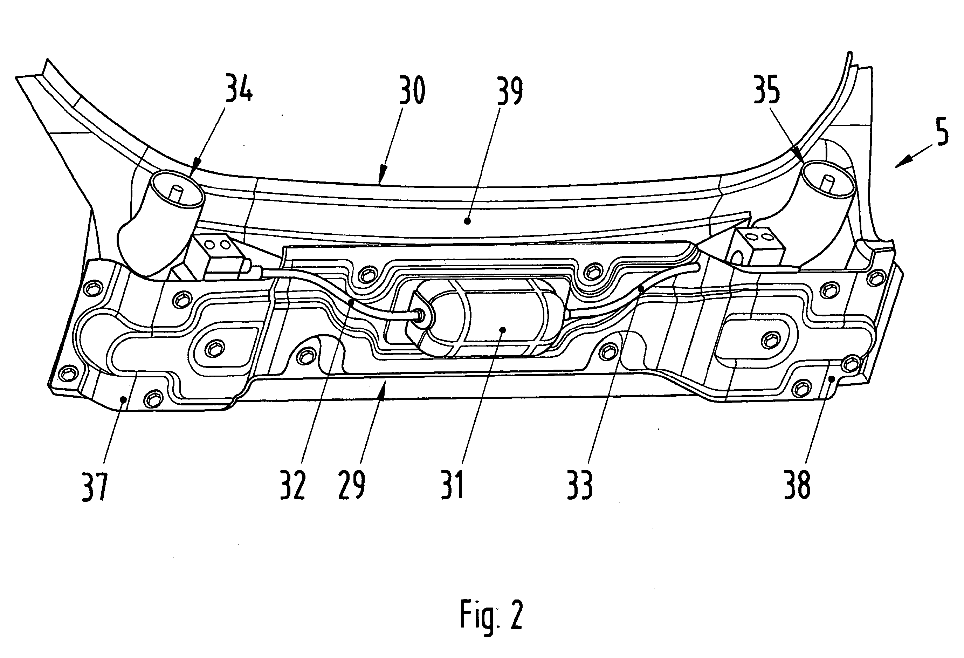

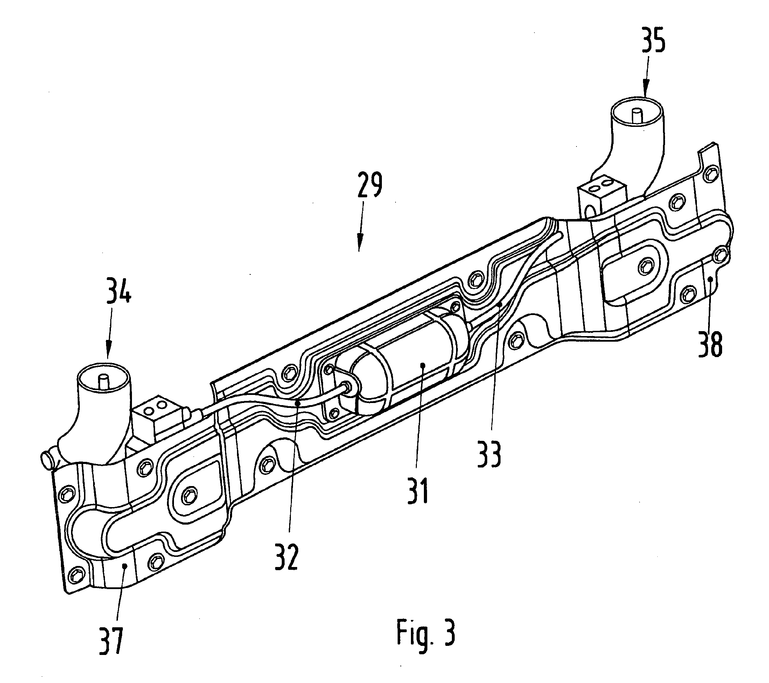

Unter der Heckhaube 8 ist - wie aus den Figuren 2 und 3 hervorgeht - ein Querträger 30 angeordnet, an dem die Verstelleinrichtung 5 über ein Trägerteil 29 befestigt ist. Die Verstelleinrichtung 5 umfasst einen etwa mittig an der Rückseite des Trägerteils 29 befestigten Elektromotor 31, der mittels flexiblen Wellen 32 und 33 zwei seitlich angeordnete Aussteller 34 und 35 antreibt.

Das Trägerteil 29 hat einen im Querschnitt profilierten Verlauf. Im äußeren Randbereich ist jeweils ein zum Querträger 30 hin offenes U-Profil 37 und 38 vorgesehen. Beide U-Profile 37, 38 sind durch einen im Wesentlichen planen Abschnitt 39 miteinander verbunden.

Die U-Profile 37, 38 begrenzen zusammen mit dem Querträger 30 jeweils rechts und links des Luftleitelements 50 einen freien Raum, in dem die Aussteller 34 und 35 untergebracht sind.

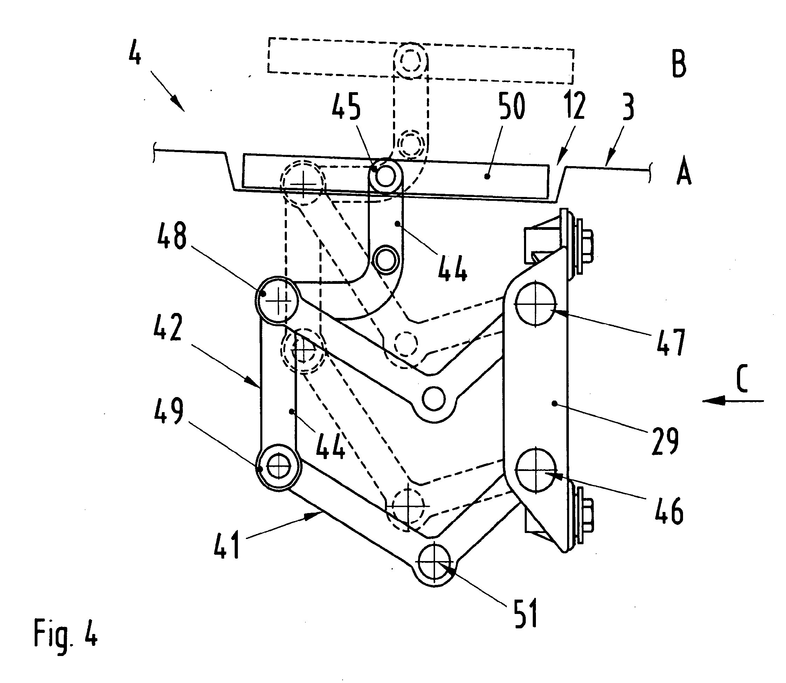

Die Kinematik der Aussteller 34 bzw. 35 ist in Figur 4 näher erläutert. Bei der Kinematik handelt es sich um ein stehendes Viergelenk, mit zwei fahrzeugfest drehgelenkig angebundene Lenker 40 und 41. Die gelenkige Anbindung der Lenker 40 bzw. 41 erfolgt durch Drehgelenke 46 und 47, die vertikal übereinander am Trägerteil 29 angeordnet sind. Durch ein Anbindungselement 42 sind die beiden lenker 40 und 41 über Drehgelenke 48 und 49 gelenkig miteinander verbunden. Das Anbindungselement 42 weist dazu eine Koppel 43 auf, die oberhalb des Drehgelenks 48 des Lenkers 40 in einen gekrümmten Halter 44 übergeht. Der Halter 44 ist an einer Befestigungsstelle 45 mit dem Luftleitelement 50 verbunden.

Der Antrieb des Systems erfolgt über eine an dem unteren Scheitelpunkt 51 des Lenkers 41 angreifenden, nicht dargestellten Gelenkhebel. Dieser ist durch eine Mutter mit einer in Fahrzeughochrichtung positionierten, nicht dargestellten Gewindespindel verbunden, die von der flexiblen Welle 32 angetrieben wird und die eine Positionierung des Heckspoilers durch ihre gewinde- bzw. werkstoffbedingte Selbsthemmung gewährleistet.

Aufgrund der vertikalen Anbindung der Lenker 40 und 41 am Trägerteil 29 ergibt sich, dass der Bauraum in Fahrzeughochrichtung im Vergleich zu einem linearen Aussteller reduziert werden kann.

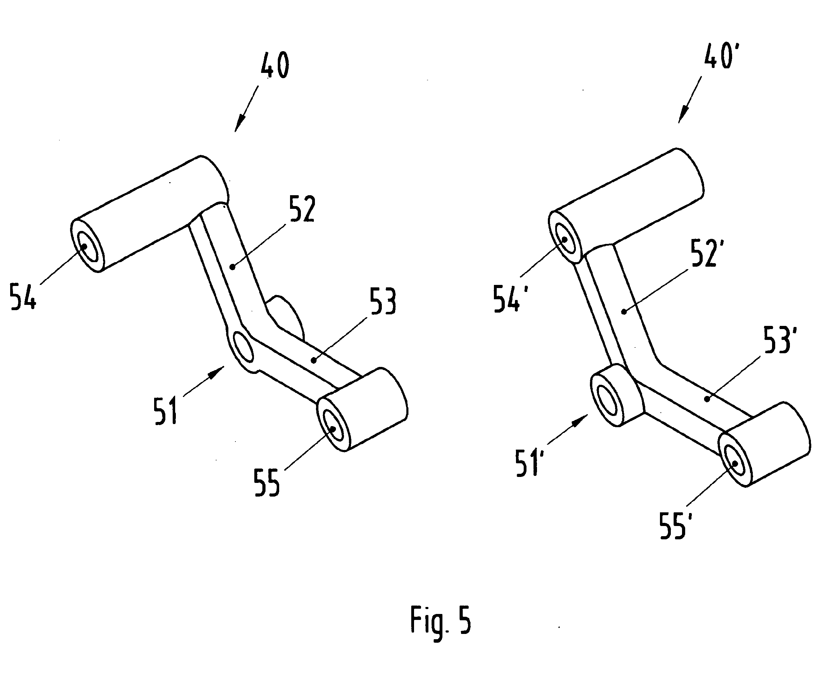

Die Geometrie der beiden Lenker 40 bzw. 41 geht aus Figur 5 hervor. Dabei zeigt die linke Darstellung den Lenker 40, der auf der rechten Fahrzeugseite beim Aussteller 35 und die rechte Darstellung den Lenker 40', der auf der linken Fahrzeugseite beim Aussteller 34 vorgesehen ist. Wie zu erkennen ist, sind die Lenker 40 bzw 40' spiegelsymmetrisch aufgebaut, so dass ein wechselseitiger Einbau möglich ist. Die Anzahl der Herstellungswerkzeuge kann somit halbiert werden.

Jeder Lenker 40 weist zwei Schenkel 52 und 53 auf, in deren Scheitelpunkt 51 je nach Einbaulage der Gelenkhebel für den Antrieb angreifen kann. An den freien Enden der Schenkel 52 und 53 ist jeweils quer dazu eine hohlzylindrische Lageraufnahme 54 und 55 angeformt, die ein entweder dem Trägerteil 29 oder dem Anbindungselement 42 zugeordneter Bolzen durchsetzt und so das jeweilige Drehgelenk bildet.

Durch eine feste Verschraubung des Trägerteils 29 mit dem Querträger 30 und dessen steife Ausführung kann eine zusätzliche Erhöhung der Torsionssteifigkeit des Fahrzeuges erreicht werden.

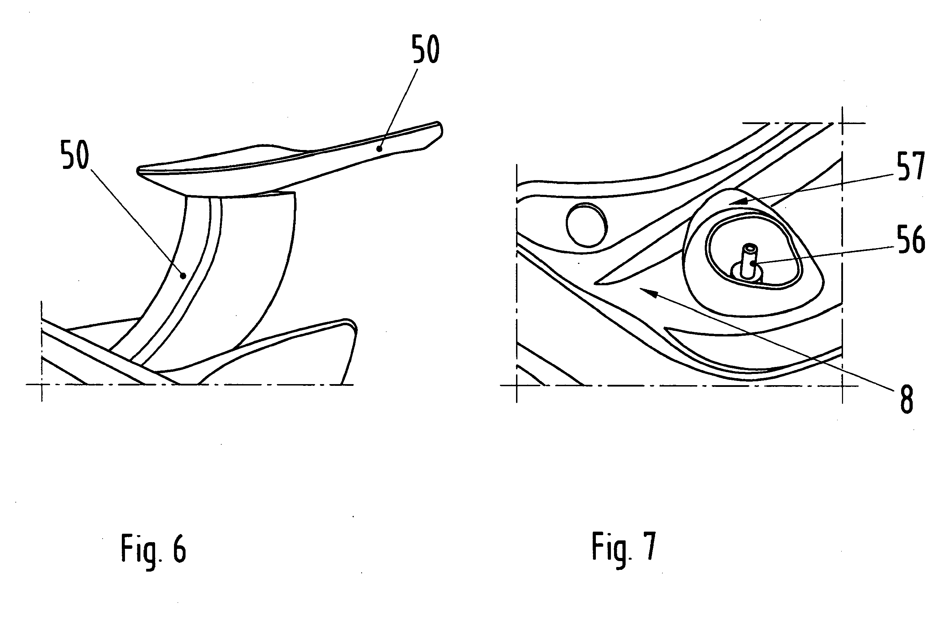

Das die beiden Lenker 40 und 41 verbindende Anbindungselement 42 wird von einem besonders geformten Spoilerfuß 56 umschlossen. Wie aus den Figuren 6 und 7 hervorgeht, ist der Spoilerfuß 56 ein hohles Kunststoffteil mit ungleichförmigen Querschnitt. In diesem Ausführungsbeispiel ähnelt die Kontur des Querschnitts einem Kegelschnitt insbesondere eines schiefen Kreiskegels. Innerhalb des hohlen Spoilerfußes 56 erstreckt sich der Halter 44 des Anbindungselements 42.

Um einen gleichmäßigen Fugenverlauf an den Austrittsöffnungen 57 zu den umliegenden Karosseriekomponenten, insbesondere zu der Heckhaube 8, zu erreichen, wird die Geometrie der Spoilerfüße 56 an die Bahnkurve der Kinematik angepasst. Dadurch wird sichergestellt, dass während des gesamten Ausfahrvorganges des Luftleitelements 50 kein positionsabhängiges Fugenbild entsteht.

Der Einsatz der oben beschriebenen Luftleiteinrichtung ist unabhängig davon zusehen, ob die Luftleitvorrichtung zur Reduzierung des Luftwiderstandsbeiwertes dient oder den dynamischen Hinterraddruck verstärkt. Selbstverständlich kann die erfindungsgemäße Luftleitvorrichtung bei Fahrzeugen mit Heckmotor angeordnet sein und zusätzlich Ansaugöffnungen für die Zuführung von Kühlluft für den Motor vorgesehen sein.

## Patentansprüche

1. Kraftfahrzeug, insbesondere Personenwagen, mit einer im Heckbereich angeordneten Luftleitvorrichtung (4), die mittels einer Verstelleinrichtung (5) von einer bündig mit dem angrenzenden Aufbau (2) des Heckbereichs verlaufenden Ruhestellung in eine demgegenüber ausgefahrene Betriebsstellung bewegbar ist, in der die Luftleitvorrichtung (4) mit einem Abstand zum angrenzenden Aufbau (2) verläuft, wobei die Verstelleinrichtung (5) zwei im seitlichen Bereich der Luftleitvorrichtung (4) angeordnete Aussteller (34, 35) zum Bewegen der Luftleitvorrichtung (4) umfasst, wobei
jeder Aussteller (34, 35) an einem fahrzeugfesten, vertikal ausgerichteten Trägerteil (29) drehgelenkig angebunden ist, wobei das Trägerteil (29) an einem unter der Heckhaube (8) angeordneten Querträger (30) befestigt ist und **dadurch gekennzeichnet, dass** das Trägerteil (29) auf jeder Seite jeweils einen zum Querträger hin offenen Bereich zur Aufnahme der Aussteller (34, 35) aufweist.

2. Kraftfahrzeug nach Anspruch 1,
**dadurch gekennzeichnet,**
**dass** die Verstelleinrichtung (5) einen Antrieb, insbesondere einen Elektromotor (31), umfasst, der an dem Trägerteil (29) befestigt ist.

3. Kraftfahrzeug nach Anspruch 2,
**dadurch gekennzeichnet,**
**dass** der Elektromotor (31) mit den Ausstellern (34, 35) über flexible Wellen (32, 33) verbunden ist.

4. Kraftfahrzeug nach einem der vorgenannten Ansprüche,
**dadurch gekennzeichnet,**
**dass** die Aussteller (34, 35) jeweils zwei Lenker aufweisen, die einerseits drehgelenkig am Trägerteil (29) und andererseits drehgelenkig an einem Anbindungselement befestigt sind.

5. Kraftfahrzeug nach Anspruch 4,
**dadurch gekennzeichnet,**
**dass** das Anbindungselement an der Luftleitvorrichtung (4) befestigt ist.

6. Kraftfahrzeug nach Anspruch 5,
**dadurch gekennzeichnet,**
**dass** jedes Anbindungselement durch einen Spoilerfuß abgedeckt ist.

7. Kraftfahrzeug nach Anspruch 6,
**dadurch gekennzeichnet,**
**dass** die Geometrie des Spoilerfußes an die Bahnkurve der Aufnahme angepasst ist.

8. Kraftfahrzeug nach Anspruch 7,
**dadurch gekennzeichnet,**
**dass** die Austrittsöffnung für jedes Anbindungselement an die Geometrie des Spoilerfußes angepasst ist.

## Claims

1. Motor vehicle, in particular passenger vehicle, with an air-guiding device (4) which is arranged in the rear region and is moveable by means of an adjustment device (5) from a rest position running flush with the adjoining body (2) of the rear region into an operating position which is extended in comparison to said rest position and in which the air-guiding device (4) runs at a distance from the adjoining body (2), wherein the adjustment device (5) comprises two setting-out mechanisms (34, 35), which are arranged in the lateral region of the air-guiding device (4), for moving the air-guiding device (4), wherein each setting-out mechanism (34, 35) is hingedly connected to a vehicle-mounted, vertically oriented support part (29), wherein the support part (29) is fastened to a cross member (30) arranged under the boot lid (8), **characterized in that** the support part (29) has, on each side, a respective region, which is open towards the cross member, for receiving the setting-out mechanisms (34, 35).

2. Motor vehicle according to Claim 1, **characterized in that** the adjustment device (5) comprises a drive, in particular an electric motor (31), which is fastened to the support part (29).

3. Motor vehicle according to Claim 2, **characterized in that** the electric motor (31) is connected to the setting-out mechanisms (34, 35) via flexible shafts (32, 33).

4. Motor vehicle according to one of the preceding claims, **characterized in that** the setting-out mechanisms (34, 35) each have two links which are hingedly fastened on one side to the support part (29) and are hingedly fastened on the other side to a connecting element.

5. Motor vehicle according to Claim 4, **characterized in that** the connecting element is fastened to the air-guiding device (4).

6. Motor vehicle according to Claim 5, **characterized in that** each connecting element is covered by a spoiler foot.

7. Motor vehicle according to Claim 6, **characterized in that** the geometry of the spoiler foot is matched to the trajectory curve of the receptacle.

8. Motor vehicle according to Claim 7, **characterized in that** the outlet opening for each connecting element is matched to the geometry of the spoiler foot.

## Revendications

1. Véhicule automobile, en particulier voiture particulière, doté d'un déflecteur d'air (4) disposé dans la région arrière, qui est déplaçable au moyen d'un dispositif de déplacement (5) d'une position de repos s'étendant à fleur de la superstructure adjacente (2) de la région arrière à une position d'utilisation relevée par rapport à celle-ci, dans laquelle le déflecteur d'air (4) s'étend à une distance de la superstructure adjacente (2), dans lequel le dispositif de déplacement (5) comprend deux bras (34, 35) disposés dans la région latérale du déflecteur d'air (4) pour le déplacement du déflecteur d'air (4), dans lequel chaque bras (34, 35) est relié par une articulation rotative à une partie de support (29) solidaire du véhicule et orientée verticalement, dans lequel la partie de support (29) est fixée à une traverse (30) disposée sous le capot arrière (8), **caractérisé en ce que** la partie de support (29) présente sur chaque côté respectivement une zone ouverte en direction de la traverse destinée à recevoir les bras (34, 35).

2. Véhicule automobile selon la revendication 1, **caractérisé en ce que** le dispositif de déplacement (5) comprend un entraînement, en particulier un moteur électrique (31), qui est fixé à la partie de support (29).

3. Véhicule automobile selon la revendication 2, **caractérisé en ce que** le moteur électrique (31) est relié aux bras (34, 35) au moyen d'arbres flexibles (32, 33).

4. Véhicule automobile selon l'une quelconque des revendications précédentes, **caractérisé en ce que** les bras (34, 35) présentent respectivement deux bielles, qui sont fixées d'une part par une articulation rotative à la partie de support (29) et d'autre part par une articulation rotative à un élément de liaison.

5. Véhicule automobile selon la revendication 4, **caractérisé en ce que** l'élément de liaison est fixé au déflecteur d'air (4).

6. Véhicule automobile selon la revendication 5, **caractérisé en ce que** chaque élément de liaison est recouvert par un pied de becquet.

7. Véhicule automobile selon la revendication 6, **caractérisé en ce que** la géométrie du pied de becquet est adaptée à la courbe du profil du logement.

8. Véhicule automobile selon la revendication 7, **caractérisé en ce que** l'ouverture de sortie pour chaque élément de liaison est adaptée à la géométrie du pied de becquet.
